# FASCICULE DE BREVET EUROPEEN

(11) **EP 1 521 780 B1**
(45) Date de publication et mention de la délivrance du brevet: **26.12.2012**
(21) Numéro de dépôt: 03763934.1
(22) Date de dépôt: 07.07.2003
(51) Int. Cl.: C08B 37/00, C08B 31/18, C08B 15/04, C08B 37/14, C08B 37/02, C08B 37/08, C08B 37/18

(54) **PROCEDE POUR L OBTENTION DE POLYSACCHARIDES MODIFIES PAR OXY DATION DES GROUPES HYDROXYLES**
VERFAHREN ZUR HERSTELLUNG VON POLYSACCHARIDEN, DIE DURCH OXIDIERUNG VON HYDROXYLGRUPPEN MODIFIZIERT SIND
METHOD FOR OBTAINING MODIFIED POLYSACCHARIDES BY OXIDATION OF HYDROXYL GROUPS

(30) Priorité: 12.07.2002 FR 0208851
(43) Date de publication de la demande: 13.04.2005
(73) Titulaire: CENTRE NATIONAL DE LA RECHERCHE SCIENTIFIQUE, 75016 Paris Cédex (FR)
(72) Inventeur: GALLEZOT, Pierre, F-69001 LYON (FR); SOROKIN, Alexander, F-69270 FONTAINE ST MARTIN (FR); KACHKAROVA SOROKINA, Svetlana, F-69270 FONTAINE ST MARTIN (FR)
(74) Mandataire: Neyret, Daniel Jean Marie
(86) Numéro de dépôt international: PCT/FR2003/002105
(87) Numéro de publication internationale: WO 2004/007560

(56) Documents cités:
- EP-A- 0 588 767
- WO-A-01/57309
- WO-A-95/23118
- DE-A- 19 916 078
- GB-A- 1 390 488
- US-A- 5 132 465
- A. SOROKIN ET AL.: "Metallophthalocyanine-catalyzed oxidation of catechols by H2O2 and its surrogates" JOURNAL OF MOLECULAR CATALYSIS A: CHEMICAL, vol. 117, 1997, pages 103-114, XP001134960
- N. D'ALESSANDRO ET AL.: "Oxidation of C1-C4 alcohols by iron- and ruthenium-sulfophthalocyanine precatalysts with hydrogen peroxide or mono-persulfate in water" JOURNAL OF MOLECULAR CATALYSIS, vol. 175, 2001, pages 83-90, XP001134959

## Description

L'invention concerne l'utilisation d'un peroxyde en présence d'au moins un complexe phtalocyanine - métal, dans lequel le métal est choisi parmi Fe, Co, Mn, Ni, V et Ru, pour modifier un polysaccharide par transformation de groupes OH en groupes COOH et en groupes CHO, dans laquelle la quantité de peroxide dans le milieu réactionnel est entre 0,05 et 1 équivalent molaire par unité saccharide.

La modification chimique de l'amidon permet d'obtenir des produits qui sont utiles dans de nombreux domaines techniques, à partir de matières premières renouvelables. Par exemple, l'amidon modifié par oxydation des groupes hydroxyles est largement utilisé notamment dans l'industrie du papier et dans l'industrie textile (comme additif ou pour le traitement de surface). L'amidon oxydé peut aussi être utilisé comme superabsorbant, comme additif dans les peintures, dans les polymères et dans les polyélectrolytes.

Il est connu d'oxyder l'amidon par oxydation stoechiométrique à l'aide d'hypochlorite de sodium ou de periodate de sodium. Ces réactions sont efficaces, mais elles produisent de grandes quantités de déchets. En outre, l'utilisation d'hypochlorite donne des composés organiques chlorés toxiques.

Des procédés catalytiques ont été mis au point pour améliorer les performances. Divers procédés mettent en oeuvre comme catalyseur un composé comprenant un radical alkylnitrosyle, par exemple le 2,2',6,6'-tétraméthylpiperidinyl-1-oxyl (TEMPO). Un tel catalyseur est décrit notamment dans EP1077221, l'agent oxydant étant par exemple l'hypobromite ou l'hypochlorite de sodium. Ces procédés donnent de bons résultats, mais les sous-produits obtenus sont des produits halogénés toxiques. WO-99/57158 décrit un procédé d'oxydation des groupes alcool primaire d'un saccharide en fonction aldéhyde à l'aide d'un peracide, en utilisant le TEMPO ou un autre di-tert-alkyl nitroxyle comme catalyseur, et une quantité catalytique d'un halogénure dont la fonction est simplement de régénérer le TEMPO. Ce procédé met en oeuvre des produits qui sont généralement coûteux. En outre, il nécessite de solubiliser l'amidon pour effectuer la réaction dans des solutions diluées, ce qui n'est pas industriellement intéressant. US-3,655,644 décrit l'oxydation de saccha-ride estérifié par un peroxyde en présence de quantités catalytiques de sels de cuivre, notamment le sulfate de cuivre. WO 00/61639 décrit l'utilisation de méthyl trioxyde de rhénium en présence d'acide bromhydrique et d'un di-tert-alkyl nitroxyle. Les quantités de catalyseur nécessaires laissent des résidus importants d'ions métalliques dans l'amidon traité qui peuvent être gênants pour les utilisations ultérieures, notamment en ce qu'ils confèrent à l'amidon modifié une coloration non souhaitée.

Il est connu par ailleurs d'utiliser des phtalocyanines métallées pour diverses réactions d'oxydation. WO 01/57309 décrit un procédé de blanchiment de pâtes désencrées et/ou recyclées par la mise en présence de la pâte avec un agent oxydant, tel que le peroxyde d'hydrogène, et un complexe métallique de phtalocyanines, par exemple la sulfophtalocyanine de cobalt ou la sulfophtalocyanine de manganèse. Ce procédé correspond à un procédé d'oxydation de colorants fixés sur des pâtes dérivant de papiers. EP 0 588 767 décrit un procédé de blanchiment de matières fibreuses par l'ajout de photoactivateurs, qui peuvent être des complexes métalliques de phtalocyanines. L'ajout de peroxyde d'hydrogène lors du blanchiment est rapporté. US-5,877,389 décrit l'utilisation de phtalocyanines métallées, notamment des phtalocyanines de Fe ou de Mn portant des substituants ioniques, comme catalyseurs pour l'oxydation des composés organiques difficiles à oxyder tels que des hydrocarbures aromatiques polycycliques, des hydrocarbures mono- ou polycycliques aromatiques halogénés, des haloalcanes, des hydrocarbures arylaliphatiques halogénés, des halophénols. L'agent oxydant est un peroxyde. FR-2,802,939 décrit un procédé d'oxydation des thiophènes présents dans les hydrocarbures, en vue de les transformer en sulfones. L'oxydation est effectuée à l'aide d'un agent oxydant du type peroxyde, peracide ou persulfate. Le catalyseur est un catalyseur métallique, de préférence une phtalocyanine métallique portant éventuellement des groupes alkyles ou sulfoniques. FR-95/04508 décrit un procédé d'oxydation de substrats aromatiques en présence de peroxydes organiques ou minéraux et d'un catalyseur, ledit catalyseur étant choisi parmi les complexes métalliques de phtalocyanines hydrosolubles portant éventuellement un groupe ionique. Les substrats aromatiques visés sont notamment les composés de type phénol ou polyphénol. Dans tous ces documents de l'art antérieur, le but visé est de dégrader des composés halogénés, des composés soufrés ou des phénols.

La présente invention a pour but de proposer un procédé simple et efficace pour l'oxydation de polysaccharides, qui ne génère pas de sous-produits toxiques ou difficiles à éliminer.

Le procédé permet de préparer un polysaccharide modifié par transformation de groupes OH en groupes COOH et en groupes CHO.

L'oxydation du carbone en C₅, qui transforme OH en COOH, peut être représentée par le schéma réactionnel suivant :

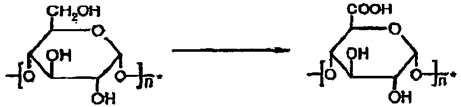

L'oxydation glycolique, qui transforme les hydroxyles en C₂-C₃ en aldéhydes, peut être représentée par le schéma réactionnel suivant :

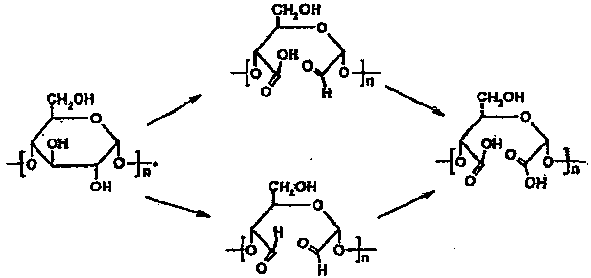

Le procédé est caractérisé en ce qu'il consiste à soumettre le polysaccharide à l'action d'un peroxyde en présence d'au moins un complexe phtalocyanine - métal agissant comme catalyseur, dans lequel le métal est choisi parmi Fe, Co, Mn, Ni, V et Ru.

Le peroxyde peut être choisi parmi les percarbonates de métal alcalin ou de métal alcalino-terreux, les perborates de métal alcalin ou de métal alcalino-terreux, les peroxydes d'alkyle, l'acide peracétique ou le peroxyde d'hydrogène. Le peroxyde d'hydrogène est particulièrement préféré, dans la mesure où il est aisément accessible et qu'il ne produit pas de sous-produits gênants.

La quantité de peroxyde dans le milieu réactionnel est entre 0,05 et 1 équivalent molaire par unité saccharide, de préférence entre 0,1 et 0,5 équivalent molaire. Il est préférable d'ajouter le peroxyde par fractions successives, en laissant le milieu réactionnel sous agitation entre deux additions.

Un complexe phtalocyanine - métal utilisable dans le procédé peut être représenté par la formule suivante : 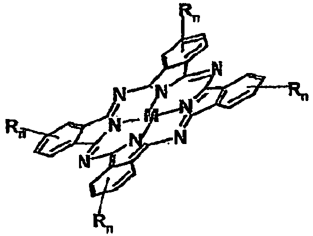 dans laquelle M représente un métal choisi parmi Fe, Co, Mn, Ni, V et Ru, les substituants R identiques ou différents, représentent un atome d'hydrogène, un groupe alkyle, un groupe alcoxyle, un groupe amino, un atome d'halogène ou un groupement ionique, et n est un nombre entier de 1 à 4. Le métal M est, de préférence, Fe ou Co. Lorsque R est un groupe alkyle, on préfère tout particulièrement les alkyles ayant de 1 à 18 atomes de carbone. Lorsque R est un alcoxyle, on préfère tout particulièrement les alcoxyles ayant de 1 à 8 atomes de carbone. Lorsque R est un groupe amino, le groupe amino est choisi de préférence parmi les groupes -NR"₂ dans lesquels chacun des substituants R" représente indépendamment de l'autre un atome H ou un radical alkyle. Les phtalocyanines portant un ou plusieurs substituants ioniques sont particulièrement intéressantes, en raison de leur solubilité dans l'eau. Les substituants ioniques sont choisis de préférence parmi HSO₃-, NaSO₃-, HOOC-, et les groupements -NR'₃⁺ dans lesquels chacun des substituants R' représente indépendamment l'autre un radical alkyle, choisi de préférence parmi ceux qui ont de 1 à 18 atomes de carbone.

On peut utiliser comme catalyseur une phtalocyanine unique ou un mélange de phtalocyanines, par exemple un mélange de phtalocyanine de Co et de phtalocyanine de Fe.

La quantité de catalyseur dépend du degré de substitution souhaité. En général une faible quantité, par exemple une quantité correspondant à 3.10⁻⁵ - 16.10⁻⁵ équivalent molaire pour 1 mole d'unité saccharide est convenable.

La température de la réaction est généralement comprise entre 20°C et 90°C. L'intervalle de température entre 45°C et 70°C et particulièrement préféré.

La réaction est effectuée de préférence en maintenant le pH du milieu réactionnel à une valeur entre 3 et 12, plus particulièrement entre 7 et 8,5.

Le procédé peut être mis en oeuvre pour tout polysaccharide. A titre d'exemple, on peut citer les divers amidons (amidon de maïs, amidon de riz, amidon de blé, amidon de pomme de terre), les celluloses, les hémicelluloses, les dextrines, les dextrans, l'inuline, le chitosan, la gomme guar, et le pullulan.

Le procédé peut être mis en oeuvre selon différentes modalités.

Lorsque le complexe phtalocyanine-métal et le polysaccharide sont solubles dans l'eau, le procédé peut être mis en oeuvre en solution aqueuse.

Lorsqu'au moins l'un des constituants est insoluble dans l'eau, le procédé peut être mis en oeuvre en suspension aqueuse. Ce mode de mise en oeuvre sera utilisé par exemple pour les amidons non solubles dans l'eau.

Le procédé peut également être mis en oeuvre en mettant en contact le polysaccharide à l'état pulvérulent avec le catalyseur dissous dans un faible volume d'eau et avec le peroxyde. Ce procédé est désigné par procédé "demi-sec".

La présente invention est décrite plus en détail par les exemples suivants, qui sont donnés à titre d'illustration et auxquels elle n'est pas limitée.

Les essais ont été effectués avec différents amidons, avec une α-cellulose et avec de l'inuline.

Le taux de substitution des polysaccharides modifiés a été déterminé par la méthode de Smith. (Cf. notamment R. J. Smith : Characterization and analysis of starches, in « Starch : Chemistry and Technology », Eds. R.L. Wristler and E.F. Paschall, Volume II, Academic Press, Inc., New York 1967, pp 620-625). Le spectre RMN du ¹³C d'un amidon oxydé présente les signaux à 171,6 ppm et à 180,5 ppm, caractéristiques respectivement des groupes COOH et des groupes CHO.

Les résultats sont exprimés en "degré de substitution par des groupes carboxyles par 100 unités de saccharide" désigné par degré DCOOH, et en "degré de substitution par des groupes carbonyles par 100 unités de saccharide" désigné par degré DCHO.

Le rendement de la réaction, qui représente le rapport de la masse de polysaccharide oxydé à la masse de polysaccharide de départ, calculé sur la base du poids sec, est exprimé en %.

T représente la température de la réaction, en °C.

Les catalyseurs selon l'invention utilisés sont :
● la tétrasulfophtalocyanine de fer, désignée par FePcS, la tétrasulfophtalocyanine de cobalt, désignée par CoPcS et la tétrasulfophtalocyanine de manganèse, désignée par MnPcS qui correspondent à la formule donnée précédemment dans laquelle chacun des substituants R représente NaSO₃-et M représente respectivement Fe, Co ou Mn ;
● la tétrasulfophtalocyanine de vanadyle désignée par VOPcS, qui correspond à la formule donnée précédemment, dans laquelle R est NaSO₃⁻ et M est V ;
● la tétracarboxyphtalocyanine de fer, désignée ci-après par FePc(COOH)₄ correspondant à la formule donnée précédemment, R étant un groupe carboxyle et M étant Fe.

L'exemple 1 correspond à des essais dans lesquels le procédé est mis en oeuvre en solution aqueuse. Les exemples 2 à 5 correspondent à des essais dans lesquels le procédé est mis en oeuvre en suspension aqueuse. Les exemples 6 à 12 correspondent à une mise en oeuvre du procédé demi-sec.

### Exemple 1

On a dissous 20 g d'amidon cationique dans 400 ml d'eau contenant 14 mg (12 µmol) de FePcS et de CoPcS dans un rapport FePcS/CoPcS = 1/1. L'amidon utilisé est un amidon portant des groupes ammonium chargés positivement. On a chauffé la solution à 58°C et on ajusté le pH à 8,4 avec une solution de NaOH. On a ensuite ajouté 3 fois 1,5 ml d'eau oxygénée à 1 heure d'intervalle, puis on a maintenu le mélange réactionnel sous agitation à la température T pendant 5 heures à pH 8,4 à l'aide d'un appareil "pH stat" qui injecte la quantité appropriée de solution de NaOH 1M en fonction de la quantité d'acide formé dans le milieu réactionnel. Après la consommation complète de l'oxydant, déterminée par iodométrie, on a récupéré par lyophilisation le produit obtenu. Après séchage, on a déterminé le degré DCOOH et le degré DCHO.

Les degrés de substitution et le rendement Rdt obtenus aux différentes températures de réaction sont indiqués dans le tableau ci-dessous. Il apparaît que les meilleurs résultats sont obtenus lorsque la température est supérieure à 40°C.

**Tableau 1**

| T (°C) | DCOOH | DCHO | Rdt |
|---|---|---|---|
| 58 | 5,72 | 7,34 | 99,2 |
| 50 | 6,58 | 5,11 | 98,7 |
| 40 | - | 4,26 | 94,4 |

Dans cet exemple, les charges positives de l'amidon agissent avec les charges négatives de FePcS et de CoPcS. Cette interaction favorise la formation de l'espèce active à proximité du site à oxyder, facilitant ainsi l'oxydation.

### Exemple 2

On a mis 100 g d'amidon brut de pomme de terre en suspension dans 400 ml d'eau contenant 70 mg (0,062 mmol) de FePcS. On a chauffé cette suspension à 58°C et on a ajusté le pH à une valeur de 8,4 à l'aide d'une solution de NaOH. On a ensuite ajouté 3 fois 7,33 ml d'eau oxygénée à 1 heure d'intervalle, puis on a maintenu le mélange réactionnel sous agitation à 58°C pendant 7 heures à pH 8,4 en utilisant un pH stat chargé avec la solution de NaOH 1M. Après la consommation complète de l'oxydant, déterminée par iodométrie, on a ajouté 2 volumes d'éthanol qui favorise la précipitation de la faible quantité d'amidon passé en solution et augmente ainsi le rendement de la réaction, on a séparé par filtration le produit obtenu, et on a lavé. Après séchage, on a déterminé le degré DCOOH et le degré DCHO.

Le mode opératoire ci-dessus a été reproduit avec différentes quantités d'amidon, en gardant le même rapport entre le catalyseur, l'agent oxydant et l'amidon. Le tableau 2 indique les quantités d'amidon utilisées (la quantité brute est indiquée dans la première colonne, la quantité à l'état sec correspondante est indiquée dans les colonnes 2 et 3), ainsi que les résultats obtenus.

**Tableau 2**

| amidon | | | DCOOH | DCHO | Rdt |
|---|---|---|---|---|---|
| Brut (g) | Sec (g) | Sec (mmol) | | | |
| 50 | 41,67 | 257,66 | 0,50 | 1,00 | 56 % |
| 100 | 83,33 | 515,33 | 0,83 | 2,32 | 63 % |
| 150 | 125 | 773 | 0,90 | 5,19 | 83 % |

Il apparaît de cet exemple qu'une augmentation de la concentration en amidon, en catalyseur et en agent oxydant dans le milieu réactionnel provoque une oxydation plus efficace et un changement de la sélectivité en faveur de la fonction carbonyle. -

### Exemple 3

On a mis 150 g d'amidon brut de pomme de terre (correspondant à 125 g ou 773 mmol à l'état sec) en suspension dans 400 ml d'eau contenant FePcS et CoPcS dans un rapport 1/1. On a chauffé cette suspension à 58°C et on a ajusté le pH à 7,0 ou à 8,5 à l'aide d'une solution de NaOH. On a ensuite ajouté 3 fois 11 ml d'eau oxygénée à 1 heure d'intervalle, puis on a maintenu le mélange réactionnel sous agitation à 58°C pendant 7 heures à un pH donné en utilisant un "pH stat" chargé avec la solution de NaOH 1M. Après la consommation complète de l'oxydant, déterminée par iodométrie, on a ajouté 2 volumes d'éthanol, on a séparé par filtration le produit obtenu, et on a lavé. Après séchage, on a déterminé le degré DCOOH et le degré DCHO.

Les essais ont été effectués avec différentes quantités de catalyseur et sous différents pH. Le tableau 3 indique le pH et les quantités Q de catalyseur utilisées (en mmol), ainsi que les résultats obtenus pour les différents essais.

**Tableau 3**

| PH | Q | DCOOH | DCHO | Rdt |
|---|---|---|---|---|
| 7 | 0,03 | 0,7 | 3,2 | 86 % |
| 7 | 0,06 | 2,0 | 10,4 | 57 % |
| 7 | 0,12 | 2,0 | 9,0 | 61 % |
| 8,5 | 0,03 | 0,8 | 6, 4 | 45 % |
| 8,5 | 0,06 | 0,8 | 5,7 | 46 % |
| 8, 5 | 0,12 | 1,2 | 4,9 | 57 % |

Ces essais montrent que, pour un pH donné, le résultat ne varie que faiblement avec la quantité de catalyseur. Un bon degré d'oxydation peut être obtenu avec une quantité de catalyseur aussi faible que 0,03 mmol.

### Exemple 4

On a mis 150 g d'amidon de pomme de terre (correspondant à 125 g, 773 mmol à l'état sec) en suspension dans 400 ml d'eau contenant comme catalyseur un composé de Fe. On a chauffé cette suspension à 58°C et on a ajusté le pH à l'aide d'une solution de NaOH. On a ensuite ajouté 380 mmol d'eau oxygénée en trois fractions à 1 heure d'intervalle, puis on a maintenu le mélange réactionnel sous agitation à 58°C pendant 7 heures, le pH étant ajusté en utilisant un "pH stat" chargé avec la solution de NaOH 1M. Après la consommation complète de l'oxydant, déterminée par iodométrie, on a ajouté 2 volumes d'éthanol, on a séparé par filtration le produit obtenu, et on a lavé. Après séchage, on a déterminé le degré DCOOH et le degré DCHO.

Selon ce mode opératoire, on a effectué une série d'essais selon l'invention en utilisant FePcS comme catalyseur, et une série d'essais à titre comparatif, en utilisant FeSO₄ comme catalyseur. Les conditions spécifiques des divers essais et les résultats obtenus sont donnés dans le tableau 4 ci-dessous. La quantité de catalyseur Q est exprimée en mmol. Il apparaît que la quantité de sulfate de fer nécessaire pour obtenir une substitution doit être de 20 fois la quantité requise pour FePcS.

**Tableau 4**

| Catalyseur | Q | PH | DCOOH | DCHO | Rdt |
|---|---|---|---|---|---|
| FeSO₄ | 1,20 | 3 | 2,40 | 5,80 | 72 % |
| FeSO₄ | 0,06 | 3 | 0 | 0 | 93 % |
| FePcS | 0,06 | 7 | 2,05 | 9,11 | 61 % |
| FePcS | 0,06 | 8,3 | 0,90 | 5,19 | 83 % |

### Exemple 5

Selon le mode opératoire de l'exemple 4, on a effectué une série d'essais avec FeSO₄ et une série d'essais avec FePcS en vue de comparer la teneur en Fe résiduel dans le produit final, étant noté que la teneur en fer naturel dans l'amidon de pomme de terre est de 6 ppm. Les conditions spécifiques des divers essais et les résultats sont donnés dans le tableau 5 ci-dessous. La quantité de catalyseur Q est exprimée en mmol, la teneur en Fe résiduel en ppm. Il apparaît que l'amidon oxydé par FePcS est parfaitement blanc et contient pratiquement la même teneur en fer que l'amidon natif, alors que l'amidon oxydé par le sulfate de fer présente une coloration non négligeable et contient des quantités importantes de fer.

**Tableau 5**

| Catalyseur | Q | Teneur en Fe | DCOOH | DCHO |
|---|---|---|---|---|
| FeSO₄ pH 7 | 1,2 mmol | 420 ppm | 0,80 | 2,91 |
| FeSO₄, pH 3 | 1,2 mmol | 190 ppm | 2,40 | 5,80 |
| FePcS, pH 7 | 0,03 mmol | 6 ppm | 0,21 | 1,43 |
| FePcS, pH 7,3 | 0,06 mmol | 20 ppm | 1,85 | 5,46 |

### Exemple 6

On a préparé une solution de 46 mg de FePcS et de CoPcS dans un rapport 1/1 dans 20 ml d'eau, que l'on a ajoutée à 50 g (260 mmol) d'amidon de pomme de terre (poids sec : 42 g), et on a mélangé pour obtenir un état homogène. La quantité d'eau dans ce mélange réactionnel est de 35%. Ensuite, on a ajouté 5 ml d'eau oxygénée à la masse réactionnelle qui reste à l'état solide, et on mélangé à nouveau pour obtenir un état homogène. On a ensuite placé le mélange dans une étuve à 60°C pendant 14 heures, sans agitation. On a récupéré un produit blanc que l'on a analysé.

Le mode opératoire ci-dessus a été reproduit en faisant varier la quantité d'eau par rapport à la quantité d'amidon. Les résultats sont rassemblés dans le tableau 6 ci-dessous. Il apparaît que la quantité optimale d'eau se situe entre 35-45 %, ce qui permet d'obtenir un degré de substitution et un rendement élevés. Pour des teneurs en eau inférieures à 35%, la solution de catalyseur ne peut être introduite de manière homogène dans l'amidon.

**Tableau 6**

| Quantité d'eau dans le mélange réactionnel | DCOOH | DCHO | Rdt |
|---|---|---|---|
| 55 % | 3,0 | 5,9 | 70 % |
| 45 % | 3,8 | 8,0 | 95 % |
| 35 % | 4,6 | 8,5 | 98 % |

### Exemple 7

Afin de vérifier l'influence de la quantité de catalyseur, on a reproduit le mode opératoire de l'exemple 6 en modifiant le rapport molaire de catalyseur / amidon (Q_{Cat}) / (Q_{Am}). Les résultats sont reportés dans le tableau 7 ci-dessous. Il apparaît que l'oxydation est très efficace, même en présence de très faibles quantités de catalyseur.

**Tableau 7**

| Q_{cat}/Q_{Am} | DCOOH | DCHO | Rdt |
|---|---|---|---|
| 1/26 000 | 1,5 | 5,6 | 93 |
| 1/13 000 | 3,7 | 8,0 | 90 |
| 1/6 500 | 4,0 | 8,0 | 91 |

### Exemple 8

On a reproduit les conditions de l'exemple 6 en remplaçant l'amidon de pomme de terre par des amidons d'autres sources. Les caractéristiques des divers amidons, les conditions particulières de mise en oeuvre et les résultats obtenus sont donnés dans le tableau 8 ci-dessous. T_{gel} représente la température de gélification de l'amidon.

**Tableau 8**

| Amidon | Amylose (%) | Amylopectine (%) | Diamètre de granules, µm | T_{gel}°C | T | DCOOH | DCHO |
|---|---|---|---|---|---|---|---|
| Pdt | 20 | 80 | 5-100 | 50-68 | 60°C | 4,0 | 8,0 |
| Maïs | 27 | 73 | 5-30 | 62-80 | 60°C | 3,6 | 6,0 |
| | | | | | 70°C | 3,65 | 6,2 |
| Maïs | 0 | 100 | 5-30 | 63-72 | 60°C | 3,1 | 6,1 |
| | | | | | 70°C | 4,3 | 5,85 |
| Riz | 19 | 81 | 1-3 | 66-78 | 60°C | 1,5 | 3,6 |
| | | | | | 70°C | 2,9 | 6,3 |
| Blé | 25 | 75 | 1-45 | 52-85 | 60°C | 3,5 | 6,1 |

### Exemple 9

Afin de vérifier l'influence de la nature de catalyseur on a reproduit les conditions de l'exemple 6 avec une quantité d'eau dans le mélange réactionnel de 35%, en remplaçant le mélange de FePcS/CoPcS 1/1 par la même quantité molaire d'autres complexes. Les résultats sont donnés dans le tableau 9 ci-dessous.

**Tableau 9**

| Catalyseur | DCOOH | DCHO | Rdt % |
|---|---|---|---|
| FePcS/CoPcS=1/1 | 4, 6 | 8,5 | 98 |
| FePcS | 4,0 | 8,0 | 95 |
| CoPcS | 0,3 | 1,3 | 96 |
| MnPcS | <0,1 | <0,1 | 95 |
| VOPcS | <0,1 | <0,1 | 97 |
| FePc(COOH)₄ | 2,2 | 4, 6 | 95 |
| FePcN | 1,5 | 4, 9 | 92 |

On constate, que les complexes de fer présentent la meilleure activité dans l'oxydation de l'amidon.

### Exemple 10

On a reproduit les conditions de l'exemple 6, en modifiant les quantités, les températures et les durées. La quantité d'eau dans le mélange réactionnel était de 45%. Les conditions particulières et les résultats obtenus sont rassemblés dans le tableau ci-dessous.

**Tableau 10**

| Essai | A (ex. 6) | B | C | D |
|---|---|---|---|---|
| FePcS/CoPcS 1/1 | 46 mg | 46 mg | 23 mg | 46 mg |
| Eau | 20 ml | 20 ml ** | 10 ml | 10 ml |
| Amidon (poids sec) | 42 g | 42 g | 42 g | 42 g |
| H₂O₂ | 5 ml | 3 ml | 3 ml | 5 ml |
| Température | 60°C | 50°C | 55°C | 55°C |
| Durée | 14 h | 13,5 h | 20 h | 20 h |
| DCOOH | 3,80 | 0,40 | 1,39 | 7,82 |
| DCHO | 8,00 | 2,40 | 3,95 | 8,32 |
| Rdt % | | 93 | 91 | 90 |

| | | | | |
|---|---|---|---|---|
| ** solution aqueuse de NaOH 0,025 M | | | | |

La comparaison des essais C et D montre qu'une augmentation de la concentration en catalyseur et en oxydant augmente le taux d'oxydation de l'amidon, à température et durée égales.

### Exemple 11

On a préparé une solution de 23 mg de FePcS dans 5 mL d'eau que l'on a ajoutée à 25 g de α-cellulose (poids sec : 22,13 g, 136 mmol), et on a mélangé pour obtenir un état homogène. Ensuite, on a ajouté 2,5 mL d'eau oxygénée à la masse réactionnelle qui reste à l'état solide et on a mélangé à nouveau pour obtenir un état homogène. On a ensuite placé le mélange dans une étuve à 60°C pendant 14 heures. On a récupéré un produit blanc avec le résultat suivant : rendement = 95 % ; DCOOH = 5,20 ; DCHO = 4,04.

### Exemple 12

On a dissous 10 g d'inuline dans 20 mL d'eau contenant 9,2 mg (8 µmol) de FePcS. On a chauffé la solution à 60°C et on a ajouté 1 mL d'eau oxygénée. Le mélange réactionnel a été mélangé pendant 5 heures. Après la consommation complète de l'oxydant, déterminée par iodométrie, on a récupéré par lyophilisation le produit avec le rendement de 96 %. Le résultat des analyses est : DCOOH = 5,90 ; D_{CHO} = 16,81.

## Revendications

1. Utilisation d'un peroxyde en présence d'au moins un complexe phtalocyanine - métal, dans lequel le métal est choisi parmi Fe, Co, Mn, Ni, V et Ru, pour modifier un polysaccharide par transformation de groupes OH en groupes COOH et en groupes CHO, dans laquelle la quantité de peroxide dans le milieu réactionnel est entre 0,05 et 1 équivalent molaire par unité saccharide.

2. Utilisation selon la revendication 1, dans laquelle le polysacharide est choisi parmi les dextrines, les dextrans, l'inuline, le chitosan, la gomme guar, le pullulan et l'amidon.

3. Utilisation selon la revendication 1 ou 2, **caractérisée en ce que** le complexe phtalocyanine-métal est un complexe phtalocyanine-Fe.

4. Utilisation selon l'une des revendications 1 à 3, **caractérisée en ce que** le complexe phtalocyanine - métal est représenté par la formule suivante : 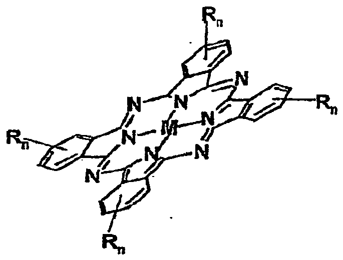 dans laquelle M représente ledit métal, les substituants R identiques ou différents, représentent un atome d'hydrogène, un groupe alkyle, un groupe alcoxyle, un groupe amino, un atome d'halogène ou un groupement ionique, et n est un nombre entier de 1 à 4.

5. Utilisation selon la revendication 4, **caractérisée en ce que** R est un groupe alkyle ayant de 1 à 18 atomes de carbone, un groupe alcoxyle ayant de 1 à 8 atomes de carbone, un groupe amino - NR"₂ dans lequel chacun des substituants R" représente indépendamment de l'autre un atome H ou un radical alkyle.

6. Utilisation selon la revendication 4, **caractérisée en ce que** au moins l'un des substituants R est un substituant ionique choisi parmi HSO₃-, NaSO₃-, HOOC-, et les groupements -NR'₃⁺ dans lesquels chacun des substituants R' représente indépendamment de l'autre un radical alkyle.

7. Utilisation selon la revendication 1, **caractérisé en ce que** l'on utilise un mélange de phtalocyanines.

8. Utilisation selon la revendication 1, **caractérisé en ce que** la quantité de complexe phtalocyanine - métal utilisé correspond à 3.10⁻⁵ - 16.10⁻⁵ équivalent molaire pour 1 mole d'unité saccharide.

9. Utilisation selon la revendication 1, **caractérisée en ce que** le peroxyde est choisi parmi les pércarbonates de métal alcalin ou de métal alcalino-terreux, les perborates de métal alcalin ou de métal alcalino-terreux, les peroxydes d'alkyle et l'acide peracétique.

10. Utilisation selon la revendication 1, **caractérisée en ce que** le peroxyde est le peroxyde d'hydrogène.

11. Utilisation selon la revendication 1, **caractérisée en ce que** la température de la réaction est comprise entre 20°C et 90°C.

12. Utilisation selon la revendication 1, **caractérisée en ce que** la réaction est effectuée en maintenant le pH du milieu réactionnel à une valeur entre 3 et 12.

13. Utilisation selon la revendication 12 **caractérisée en ce que** le pH du milieu réactionnel est maintenu à une valeur entre 7 et 8,5.

14. Utilisation selon la revendication 1, **caractérisée en ce que** le polysaccharide est un amidon.

15. Utilisation selon la revendication 1, **caractérisée en ce que** le polysaccharide est choisi parmi les celluloses et les hémicelluloses.

16. Utilisation selon la revendication 1, **caractérisée en ce qu'**elle est mise en oeuvre en solution aqueuse, en utilisant un complexe phtalocyanine-métal et un polysaccharide qui sont solubles dans l'eau.

17. Utilisation selon la revendication 1, **caractérisée en ce qu'**elle est mise en oeuvre en suspension aqueuse pour un amidon non soluble dans l'eau.

## Claims

1. Use of a peroxide in the presence of at least one metal phthalocyanine complex, in which the metal is chosen from Fe, Co, Mn, Ni, V and Ru, to modify a polysaccharide by transforming on groups into COOH groups and into CHO groups, in which the quantity of peroxide in the reaction medium is between 0.05 and 1 molar equivalent per saccharide unit.

2. Use according to claim 1, in which the polysaccharide is chosen from dextrins, dextrans, inulin, chitosan, guar gum, pullulan and amidone,

3. Use according to claim 1 or 2, **characterised in that** the metal phthalocyanine complex is an Fe phthalocyanine complexe.

4. Use according to one of claims 1 to 3, **characterised in that** the metal phthalocyanine complex is represented by the following formula: 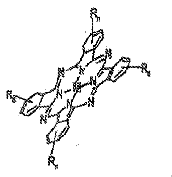 in which M represents said metal, the R substituents, identical or different, represent a hydrogen atom, an alkyl group, an alkoxy group, an amino group, a halogen atom or an ionic group, and n is a whole number from I to 4.

5. Use according to claim 4, **characterised in that** R is an alkyl group having from 1 to 18 carbon atoms, an alkoxy group having from I to 8 carbon atoms, an NR"₂ amino group, in which each of the R" substituents, independently of one another, represent an H atom or an alkyl radical.

6. Use according to claim 4, **characterised in that** at least one of the R substituents is an ionic substituent chosen from HSO₃-, NaSO₃, HOOC- and -NR'₃⁺ groups, in which each of the R' substituents, independently of one another, represents an alkyl radical.

7. Use according to claim 1, **characterised in that** a mixture of phthalocyanines is used.

8. Use according to claim 1, **characterised in that** the quantity of metal phthalocyanine complex used corresponds to 3.10⁻⁵ - 16.10⁻⁵ molar equivalent of 1 mole saccharide unit.

9. Use according to claim 1, **characterised in that** the peroxide is chosen from alkali metal or alkaline earth metal percarbonates, alkali metal or alkaline earth metal perborates, alkyl peroxides and peracetic acid.

10. Use according to claim 1, **characterised in that** the peroxide is hydrogen peroxide.

11. Use according to claim 1, **characterised in that** the temperature of the reaction is in the range of between 20°C and 90°C.

12. Use according to claim 1, **characterised in that** the reaction is conducted maintaining the pH of the reaction medium at a value of between 3 and 12.

13. Use according to claim 12, **characterised in that** the pH of the reaction medium is maintained at a value of between 7 and 8.5.

14. Use according to claim 1, **characterised in that** the polysaccharide is an amidone.

15. Use according to claim 1, **characterised in that** the polysaccharide is chosen from celluloses and hemicelluloses.

16. Use according to claim 1, **characterised in that** it is performed in an aqueous solution using a metal phthalocyanine complex and a polysaccharide, which are soluble in water.

17. Use according to claim 1, **characterised in that** it is performed in an aqueous suspension for an amidone insoluble in water.

## Patentansprüche

1. Verwendung eines Peroxids in Gegenwart wenigstens eines Phthalocyanin-Metall-Komplexes, in dem das Metall aus Fe, Co, Mn, Ni, V und Ru ausgewählt ist, zur Modifizierung eines Polysaccharids durch Überführung von OH-Gruppen in COOH-Gruppen und in CHO-Gruppen, wobei die Menge an Peroxid in dem Reaktionsmedium zwischen 0,05 und 1 Moläquivalent pro Saccharideinheit beträgt.

2. Verwendung gemäß Anspruch 1, wobei das Polysaccharid aus Dextrinen, Dextranen, Inulin, Chitosan, Guargummi, Pullulan und Stärke ausgewählt ist.

3. Verwendung gemäß Anspruch 1. oder 2, **dadurch gekennzeichnet, dass** der Phthalocyanin-Metall-Komplex ein Phthalocyanin-Fe-Komplex ist.

4. Verwendung gemäß einem der Ansprüche 1 bis 3, **dadurch gekennzeichnet, dass** der Phthalocyanin-Metall-Komplex durch folgende Formel dargestellt wird: 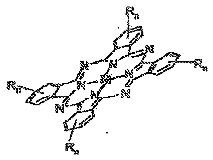 worin M das Metall darstellt, die Substituenten R gleich oder unterschiedlich sind und ein wasserstoffatom, eine Alkylgruppe, eine Alkoxylgruppe, eine Aminogruppe, ein Halogenatom oder eine ionische Gruppierung darstellen, und n eine ganze Zahl von 1 bis 4 ist.

5. Verwendung gemäß Anspruch 4, **dadurch gekennzeichnet, dass** R eine Alkylgruppe mit 1 bis 18 Kohlenstoffatomen, eine Alkoxylgruppe mit 1 bis 8 Kohlenstoffatomen, eine Aminogruppe -NR"₂, worin jeder der Substitueten R" unabhängig von dem anderen ein H-Atom oder ein Alkylradikal darstellt, ist.

6. Verwendung gemäß Anspruch 4, **dadurch gekennzeichnet, dass** wenigstens einer der Substituenten R ein ionischer Substituent ist, der aus HSO₃-, NaSO₃-, HOOC- und den Gruppierungen -NR'₃⁺, in denen jeder der Substituenten R' unabhängig von dem anderen ein Alkylradikal darstellt, ausgewählt ist.

7. Verwendung gemäß Anspruch 1, **dadurch gekennzeichnet, dass** man eine Mischung von Phthalocyaninen verwendet.

8. Verwendung gemäß Anspruch 1, **dadurch gekennzeichnet, dass** die Menge an verwendetem Phthalocyanin-Metall-Komplex 3.10⁻⁵ - 16.10⁻⁵ Moläquivalenten pro 1 Mol Saccharideinheit entspricht.

9. Verwendung gemäß Anspruch 1, **dadurch gekennzeichnet, dass** das Peroxid aus Alkalimetall- oder Erdalkalimetallpercarbonaten, Alkalimetall- oder Erdalkalimetallperboraten, Alkylperoxiden und Peressigsäure ausgewählt ist.

10. Verwendung gemäß Anspruch 1, **dadurch gekennzeichnet, dass** das Peroxid Wasserstoffperoxid ist.

11. Verwendung gemäß Anspruch 1, **dadurch gekennzeichnet, dass** die Reaktionstemperatur zwischen 20 °C und 90°C beträgt.

12. Verwendung gemäß Anspruch 1, **dadurch gekennzeichnet, dass** die Reaktion bewirkt wird, indem der pH-Wert des Reaktionsmediums bei einem Wert zwischen 3 und 12 gehalten wird.

13. Verwendung gemäß Anspruch 12, **dadurch gekennzeichnet, dass** der pH-Wert des Reaktionsmediums bei einem Wert zwischen 7 und 8,5 gehalten wird.

14. Verwendung gemäß Anspruch 1, **dadurch gekennzeichnet, dass** das Polysaccharid eine Stärke ist.

15. Verwendung gemäß Anspruch 1, **dadurch gekennzeichnet, dass** das Polysaccharid aus Zellulosen und Hemizellulosen ausgewählt ist.

16. Verwendung gemäß Anspruch 1, **dadurch gekennzeichnet, dass** sie in wässriger Lösung erfolgt, indem ein Phthalocyanin-Metall-Komplex und ein Polysaccharid eingesetzt werden, die in Wasser löslich sind.

17. Verwendung gemäß Anspruch 1, **dadurch gekennzeichnet, dass** sie in wässriger Suspension für eine in Wasser nicht lösliche Stärke erfolgt.
